Europäisches Patentamt

European Patent Office

Office européen des brevets

(19)

(11) Publication number: **0 176 635**
**A1**

(12) **EUROPEAN PATENT APPLICATION**

(21) Application number: **84306548.3**

(22) Date of filing: **26.09.84**

(51) Int. Cl.⁴: **G 06 K 1/12**
**G 07 B 1/00**

(43) Date of publication of application:
**09.04.86 Bulletin 86/15**

(84) Designated Contracting States:
**AT BE CH DE FR IT LI LU NL SE**

(71) Applicant: **LONDON REGIONAL TRANSPORT**
**55 Broadway**
**London SW1H 0BD(GB)**

(72) Inventor: **Tansley, Robert**
**1 Chapel Street**
**Harbury Warwickshire(GB)**

(72) Inventor: **McManus, Kevin**
**12 Waller Street**
**Leamington Spa Warwickshire(GB)**

(74) Representative: **Newens, Leonard Eric et al,**
**F.J. CLEVELAND & CO. 40/43 Chancery Lane**
**London WC2A 1JQ(GB)**

(54) **A device and apparatus for use in conjunction with tickets.**

(57) A device for printing patterns of bars (4) on a ticket comprises a row of longitudinally movable rods (10) with printing faces (11) at their one ends, the rods being moved by solenoids (16) through the intermediary of force multipliers comprising pivoted levers (12) acting on their other ends. Solenoids for successive rods are on opposite sides of the row. The patterns of bars may form symbols in 'clear' as well as bar-coded information.

The device may be used, in apparatus for use with a multi-ticket system employing tickets bearing machine-readable information. The apparatus has a reader (24), which reads information from a first ticket inserted through an inlet (29) before the ticket is diverted to a shredder (25). The apparatus also includes a printer (23) which prints a replacement ticket from a magazine (21) and delivers it to an outlet (27), after the reader has checked what is printed on it. The information on the replacement ticket is dependent on the information read from the first ticket.

EP 0 176 635 A1

./...

FIG. 2.

FIG. 3.

## A DEVICE AND APPARATUS FOR USE IN
## CONJUNCTION WITH TICKETS

This invention is concerned with a device and apparatus for use in conjunction with tickets. While it has largely been developed with a view to its use with travel tickets it is not restricted to such use and may be used in connection with tickets for other purposes such as entrance tickets.

It has already been proposed to produce travel tickets which bear information in bar-code form, that is bar-coded information. One aim of the present invention is to provide a device capable of printing bar-coded information onto tickets.

From a first aspect, therefore, the present invention consists in a device for applying bar-coded information to a ticket, comprising a plurality of printing elements each in the form of a rod mounted for longitudinal movement and an associated print head at one end of the rod, a plurality of electro-magnetic actuators for the printing elements, a different actuator being associated with each printing element and each actuator comprising a solenoid and an armature, and force multiplying means operative between each actuator and its associated printing element, the arrangement being such that in use when a ticket is disposed at a printing station adjacent to the print heads and an electrical printing signal is applied to any one of the solenoids, the associated armature moves and in so doing moves the associated print element, through the intermediary of the force multiplying means, so that the print head of that element causes a bar to be printed on the ticket.

The device preferably operates in such a manner that during only an initial part of the movement of each printing element is a force applied to the printing element that is derived from movement of the associated armature, a subsequent part of the movement, during which printing is effected, resulting at least partially from the inertia of the printing element.

It is to be understood that the term rod is used herein in a broad sense such as to include a rod of round or oval cross-section as well as a rod of rectangular or other cross-section. Each rod is preferably straight and is preferably such that it does not flex in use. Furthermore, the print head preferably comprises merely an end portion of the associated rod. It would nevertheless be possible to provide a rod with a print head that is distinct from the rod, being either integral with the rod or formed separately from the rod and attached to it. Furthermore the print head may include a separately formed portion such as a layer of material different from that from which the rod or the adjacent part of the head is made, that layer affording the operative printing face of the print head. In general, however, it is preferred to do none of these things and to provide a print head which is no more than an end portion of the associated rod. One reason for this is that in use the print rods and print heads are likely to be subjected to considerable stresses and it is believed that there would be an increased likelihood of failure if composite printing elements or printing elements of non-uniform shape were used.

A device embodying the present invention in some ways resembles a conventional matrix dot printer but such a printer includes a plurality of flexible wires each of which is connected at one end to the armature of an associated solenoid, the other end thereof constituting a printing head. The flexibility of the wires permits an arrangement in which those ends of the wires constituting the printing heads are grouped closely together while the other ends, connected to the armature, are spaced much further apart to allow sufficient space for the solenoids, which are relatively bulky. While such a printer is satisfactory for printing dots it cannot easily be modified to print shapes of much larger areas such as bars. Attempts to fit relatively extensive printing heads to the ends of the wires of a printer of the known kind are unsatisfactory as the stresses are such that in use the heads tend to become detached from the wires after an unacceptably short time. Further, the force required to print a relatively large area such as a bar would require the use of a relatively powerful, and therefore relatively large, solenoid; a plurality of such solenoids would be needed, and it would be difficult if not impossible to dispose them sufficiently close together to enable them to operate a plurality of adjacent printing heads.

Use of that aspect of the present invention outlined above, however, permits the use of relatively small, and therefore relatively compact, solenoids which together need not occupy a large volume of space, for the force applied to each printing element is greater than that exerted by the asociated solenoid owing to the action of the force multiplying means associated with it. Moreover, the interposition of force multiplying means between each armature and its associated printing element makes it unnecessary for the armature to be aligned with its associated printing element. This in turn makes it possible for the solenoids to be disposed in quite satisfactory dispositions in spite of the fact that usually they are relatively bulkly. It will thus be appreciated that the problems encountered in the simple modification of a matrix dot printer, aimed at enabling it to print areas significantly larger than mere dots, can be overcome with the aid of that aspect of the present invention outlined above.

There is preferably provided return spring means associated with each printing element urging it in the direction opposite to that in which the element moves in response to an electrical signal being applied to the associated solenoid. The spring means may comprise a compression spring aligned with the rod and at least partially housed within a recess or opening in the rod. In use, after any one of the printing elements has performed a printing operation it is returned to its initial position by the return spring means.

The printing elements, or at least some of them, are so disposed that in use if their print heads were operated simultaneously they would print on a ticket a single row of longitudinally aligned bars. The rods may be disposed parallel with one another. In a convenient construction of device the rods are longitudinally movable in guideways formed in a body, that body comprising first and second body components such that one face of each guideway is afforded by the first body component and an opposite face of each guideway is afforded by the second body component.

Where, as is preferred, the printing elements are disposed side by side in a row, the solenoids are preferably disposed so that there is at least one solenoid on each side of the row. Preferably the arrangement is such that the solenoids associated with alternate rods are on one side of the row of elements, while the remaining solenoids, which are associated with the intermediate rods, are on the other side of the row. Each of the force multiplying means preferably comprises a lever mounted for pivotal movement about an axis intermediate its ends, the associated armature acting upon a portion of the lever to one side of that axis while a portion of the lever to the other side of that axis acts on the associated printing element, the arrangement being such that movement of the armature causes a smaller movement of associated printing element.

Printing may be effected in any suitable manner but in a preferred arrangement there is a pigment-bearing ribbon disposed between the print heads and the printing station. Where the print heads are disposed in a row, the width of the ribbon may be less than the length of the row, the row being inclined at an angle to the length of the ribbon so that it extends substantially across the full width of the ribbon. The ribbon is preferably in the form of an endless band. Drive means is preferably provided for moving the ribbon lengthwise through a short distance intermittently.

The device preferably includes feed means operative to feed a ticket through the printing station. The feed means is preferably such as to feed a ticket through the printing station without the ticket stopping, so that in use printing is effected while the ticket is being fed through the station.

It is intended that the device be used to print a plurality of columns of bars on a ticket, the bars in each column all being printed sequentially by the same printing element and the columns lying side by side.

The device can be used with signal-generating means operative in use to supply to each of the solenoids a timed sequence of electrical printing signals such that the desired pattern of bars is printed on a ticket fed through the printing station.

From a second aspect the present invention consists in a ticket bearing bar-coded information applied by the device of the kind in accordance with the first aspect of the present invention.

It is envisaged that tickets bearing bar-coded information would be used in conjunction with bar-code readers, that is devices operative in use to sense the bars on a ticket and to generate signals which would enable the pattern of bars on a ticket to be interpreted. Not all the information in bar-code form applied to a ticket, however, need be in a form unintelligible to members of the public ignorant of the specific code employed; part of the information may comprise one or more widely recognised symbols, such as letters or numbers, each consisting of a plurality of bars disposed in appropriate positions on the ticket. For example a ticket may bear the letter R in 'clear' (i.e. in conventional, readable form) to indicate to the user that the ticket is a return ticket, the letter being built up from a plurality of bars. Where such an arrangement is used, the bars making up the 'clear' symbol or symbols on a ticket would normally be ignored by a bar-code reader.

In some existing systems which involve the use of tickets (though not tickets bearing information in bar-code form) the user buys or otherwise acquires a ticket and presents this ticket on a single occasion only, that presentation entitling the user to receive the goods or services for which the ticket was acquired. Such systems will be referred to herein as single-use ticket systems. In other existing systems, hereinafter referred to as multi-use ticket systems, the acquisition of a ticket entitles the user to receive goods or services on more than one occasion and/or in more than one place. It is usual in a multi-use ticket system for the user to be be required to present the ticket on more than one occasion either in one place or in different places. In a multi-use ticket system it is often the practice for a ticket to be marked or otherwise altered in some way on each occasion on which it is presented, apart from on the final occasion when it may be withdrawn or returned unaltered. For example, the marking or alteration of a ticket when it is presented for some particular purpose may serve to indicate thereafter that it has already been presented for that purpose, and may also serve to indicate that it may not be presented a second time for that purpose.

If a ticket bearing information in bar-code form were to be used in a multi-use ticket system of the kind referred to above, it would doubtless prove awkward to mark or otherwise alter the ticket in such a manner as to enable the bar-code reader reliably to distinguish a marked or altered ticket from an unmarked or unaltered ticket. Further, the repetitive presentation of the ticket is likely to lead to the ticket being damaged so that the bar-coded information on it can no longer be read so reliably. Investigation of these problems has suggested that they are likely to be greatly increased when the same ticket has to be marked or altered on a plurality of different occasions. The same kind of difficulty is likely to arise with tickets bearing other forms of machine-readable information, such as tickets bearing information in magnetic form.

Another aim of the present invention, therefore, is to provide apparatus such as to enable the problems outlined in the last preceding paragraph to be avoided.

From a third aspect, therefore, the present invention comprises apparatus for use with a multi-ticket system (as herein defined) employing tickets bearing machine-readable information, which apparatus comprises reading means operative to read machine-readable information on a ticket (the first ticket) presented to the reading means, and ticket issuing means operative to issue a second ticket to replace said first ticket, the ticket issuing means being operative to apply to the second ticket machine-readable information dependent on the machine-readable information read by the reading means from the first ticket.

Thus, in normal use of the apparatus the reading means reads the machine-readable information on a first ticket, whereupon the apparatus instead of marking or otherwise altering the ticket, issues a second ticket bearing machine-readable information dependent on the machine-readable information on the first ticket. The second ticket would usually serve as a replacement for the first ticket rather than as a supplement to the first ticket. When the second ticket is to serve as a replacement for the first ticket the apparatus preferably includes withdrawal means operative to withdraw the first ticket. The withdrawal means may include shredding means or the like, operative to destroy or at least to deface the first ticket so as to make it impossible to use the first ticket again.

The apparatus is preferably such that in use the machine-readable information applied to the second ticket is different from that on the first ticket so that the presentation to the apparatus of a series of two or more first tickets, one after another, each of which tickets bears different machine-readable information, can result in the apparatus issuing a corresponding series of second tickets each of which bears machine-readable information different from that on the corresponding first ticket and different from that on each of the second tickets.

The apparatus is preferably such that in use a second ticket issued by the ticket issuing means is also presented to the reading means, the apparatus including checking means operative to read the machine-readable information on the second ticket and to check that it is in fact the information intended to have been applied to it. If the machine-readable information on the second ticket, as read by the reading means, is not in fact what was intended, so that the second ticket is thus faulty, the apparatus is preferably operative to withdraw the faulty second ticket and to issue another second ticket in its place. This cycle may be automatically continued for a predetermined maximum number of times, for example, three times. If a faulty ticket is issued each of those times, the apparatus preferably ceases to attempt to issue any further second ticket and generates a fault signal.

Preferably the apparatus also includes validation means operative to check the machine-readable information read by the reading means against predetermined criteria and to generate a reject signal if those criteria are not met. The apparatus is preferably arranged to withdraw a ticket that gives rise to a reject signal and arranged not to issue a second ticket.

The validation means may also be such as to act in another manner. In the foregoing outline of the invention it has been assumed that the apparatus is to be used solely with a simple multi-use ticket system. If desired, however, the apparatus may be used in a more complex multi-use ticket system, namely one in which use is made of both multi-use and single-use tickets.

Apparatus for use in a complex multi-use ticket system of that kind may include one or more additional features, the presence of which enables the apparatus to be used with single-use tickets. For example the apparatus may include a feature enabling machine-readable information read by the reading means to be compared with certain criteria indicative of a single-use ticket (single-use criteria) and operative, if those single-use criteria are met, to return the ticket unaltered. Alternatively the apparatus may be operative to withdraw the single-use ticket without issuing a second ticket and to generate an acceptance signal. In a further alternative it may be operative to withdraw the ticket and to issue a second ticket bearing the same machine-readable information as the first ticket (at least inasfar as the single-use criteria are concerned).

The apparatus preferably has a ticket inlet, into which tickets are placed or inserted for presentation to the reading means, and a ticket outlet, from which second tickets can be taken or from which they are discharged. In cases where the apparatus can also return tickets, those tickets are preferably returned at the same ticket outlet. The apparatus also preferably includes paths along which tickets move as they pass through the apparatus in use. Transport means may be provided for causing the tickets to move along those paths. The transport means may comprise co-operating pairs of wheels or rollers between which the tickets pass, at least one of each pair of wheels or rollers being positively driven. Preferably there is a first path leading from the ticket issuing means to the ticket outlet by way of the reading means, and a second path that leads from the ticket inlet to join the first path between the ticket issuing means and the reading means. In addition there is preferably a third path, which leads from the first path, to ticket disposal means, between the reading means and the ticket outlet; in that case, any ticket that is to be withdrawn is diverted from the first path to the third path. The ticket disposal means may comprise a container of which the contents is normally inaccessible to the user. The third path may also pass shredding means or other means for destroying or defacing tickets.

The reading means is preferably such as to enable it to read the machine-readable information on a ticket as it passes along a path through the apparatus irrespective of the orientation of the ticket on that path. Each ticket is preferably longer than it is wide so that it can be inserted into the apparatus in any one of only four different possible orientations: it can enter either end first and in each case can have one or other face facing in a particular lateral direction such as upwards or to the right, so as to permit four different possible orientations. In particular the reading means preferably includes sensing means on both sides of the path, the sensing means on each side being operative to sense the machine-readable information on the adjacent face of a ticket passing along the path. Further, there is preferably means for interpreting the machine-readable information read by the sensing means and operative to yield the desired signals irrespective of which end of the ticket is at the front during the passage of the ticket through the apparatus. For example, the machine-readable information read from any ticket may be recorded in sequence and may then be processed from the recording in the same sequence or in reverse sequence, the arrangement for example being such that a particular start signal, present in the machine-readable information on every ticket, is always processed first and determines whether the recorded signals are processed in the same sequence in which they were sensed and recorded or in the reverse sequence. It is envisaged that machine-readable information would usually be provided on one face only of a ticket, but it would of course be possible for a system to operate with machine-readable information on both faces of a ticket.

Thus, in a preferred form of apparatus there are associated with the reading means recording means operative to record sequentially a plurality of signals constituting at least part of a machine-readable code read by the reading means from a first ticket, the signals having being disposed on the ticket in a predetermined effective order but the order in which the signals are recorded depending on the initial orientation of the ticket, and interpreting means operative to determine from that code on the first ticket said effective order of the signals.

It is also envisaged that the apparatus would be used in conjunction with a ticket system so arranged that the users would obtain first tickets from a source or sources other than apparatus in accordance with the third aspect of the present invention set forth above.

A preferred form of apparatus is one that is suited for use with tickets bearing bar-coded information, the reading means being bar-coded reading means and the ticket issuing means being operative to apply bar-coded information to the second ticket. In that preferred kind of apparatus the ticket issuing means preferably comprises a device in accordance with the first aspect of
the present invention.

Moreover, when the apparatus is used as part of a
system in which the users would obtain their first
tickets from a source or sources other than the
apparatus, that source or each of those sources
preferably comprises or incorporates a device in
accordance with the first aspect of the present
invention.

An embodiment of the present invention will now be
described in more detail, by way of example, with
reference to the accompanying drawings, in which:-

Figure 1 is the obverse face of a travel ticket
bearing bar-coded information,

Figure 2 is a somewhat diagrammatic plan view of a
device embodying the present invention,

Figure 3 is a section along the line 3-3 of

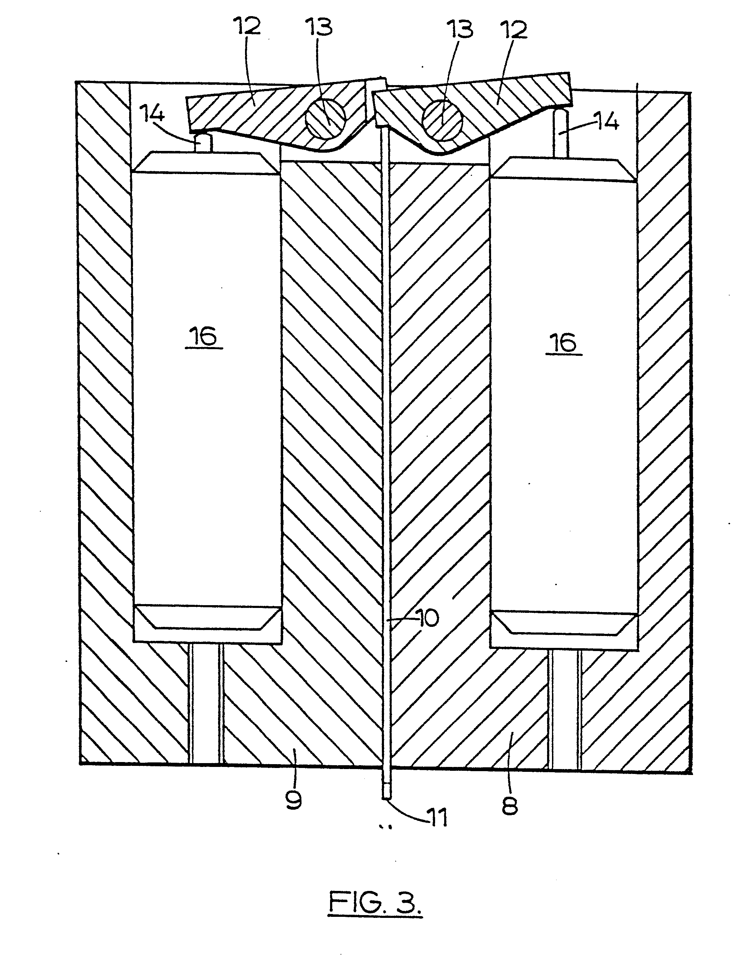

Figure 2, and

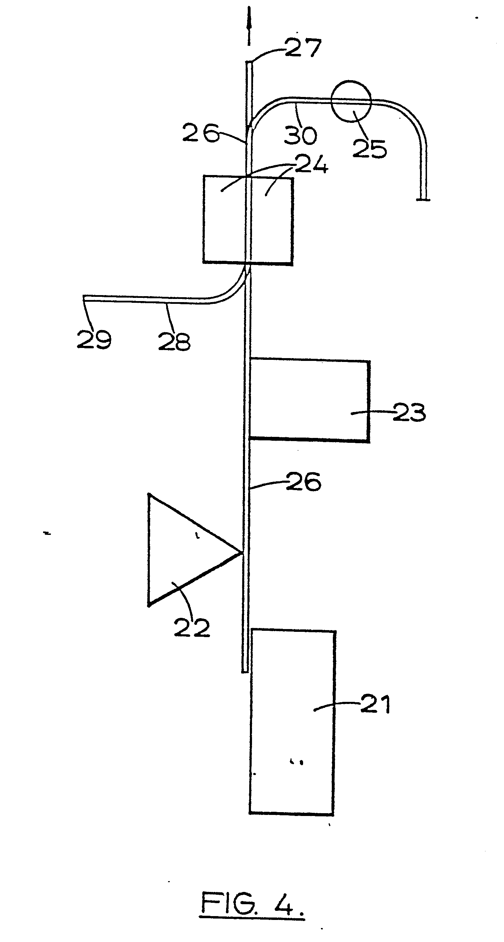

Figure 4 is a diagram of apparatus embodying the
present invention and incorporating a device of the
kind illustrated in Figures 2 and 3.

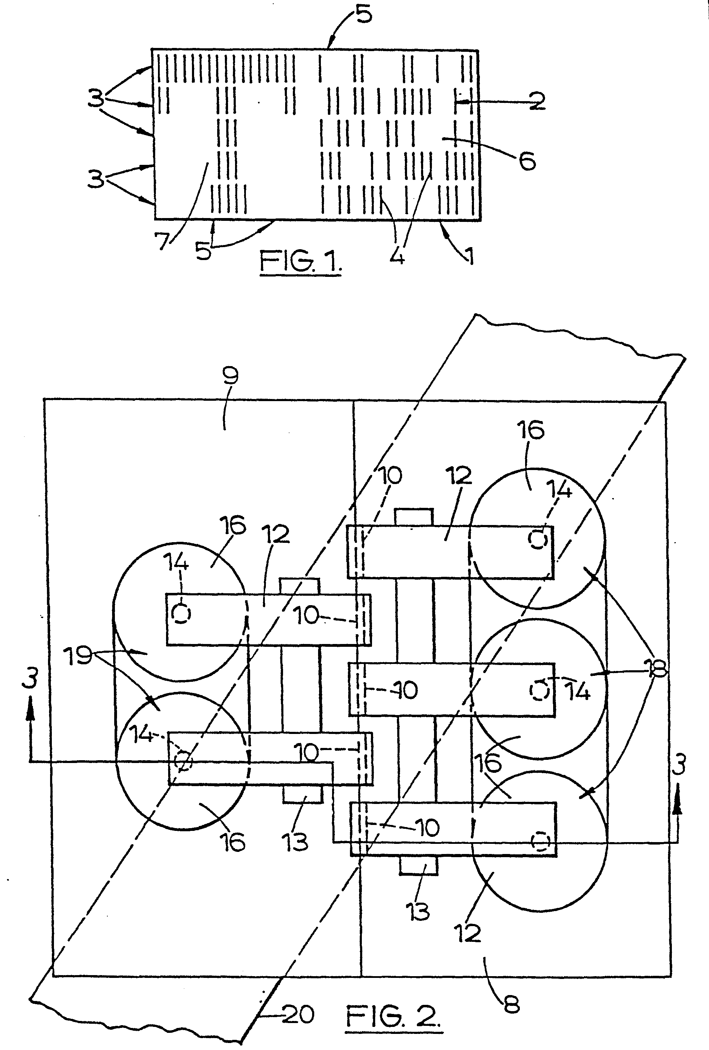

The travel ticket 1 shown in Figure 1 comprises an
oblong rectangle of cardboard which bears on its obverse
face bar-coded information 2.    This comprises five
parallel columns 3 of spaced bars 4 printed in ink on the
cardboard and extending lengthwise of the ticket.    The
bars 4 in each column 3 are so spaced that the distance
between the centre of each bar and the centre of the next
bar is either a standard distance or an integral multiple of that standard distance. Adjacent bars 4 in different columns are mutually aligned in rows 5 at right angles to the columns 3.

The pattern of bars 4 in a first area, 6, of the face of the ticket is determined by a predetermined code and may represent in coded form such information as the date of issue of the ticket, the nature of the ticket (e.g. single, return, through, season), the district in which the ticket can validly be used, the price of the ticket, etc. The code is such that it cannot be deciphered merely on inspection by someone ignorant of the code.

The pattern of bars 4 in a second area, 7, of the face of the ticket, however, is so arranged as to form the letter T. This can be read on inspection and does not require knowledge of any particular code.

The reverse face (not shown) of the ticket may be blank or it may bear information in bar-code form (either a repetition of that on the obverse or different information) or it may bear information in some other form such as conventional printed form.

The bar-coded information 2 can be printed onto the ticket 1 by any suitable printing device. One such device is that illustrated in Figures 2 and 3 of the accompanying drawings.

The device has a body comprising two body components, 8 and 9 secured together face to face. That face of the body component 8 which abuts the body component 9 is formed with five parallel grooves. The walls of each groove constitute three of the sides of a guideway of rectangular cross-section extending through the body, the fourth side of each guideway being afforded by the adjacent face of the body component 9. A rod 10 of rectangular cross-section is slidable lengthwise in each of the guideways and constitutes a printing element. The five rods 10 are disposed side by side in a row. One end portion of each rod 10 projects from the body and its end face constitutes a printing face 11. The other end of each rod is engaged by one end of an associated lever 12 mounted on the body for pivotal movement about an axis 13 intermediate its ends. The other end of each lever 12 is engaged by an adjacent end of a rod 14 constituting an armature and extending axially through an associated solenoid 16. There are five solenoids 16 in all, one associated with each of the rods 10. The solenoids are housed inside the body of the device with their axes parallel to those of the rods 10. The solenoids are disposed in two groups, 18 and 19. There are three solenoids in one group, 18, and two in the other group, 19. The group 18 is disposed in the body component 8, on one side of the rows of rods 10, and the group 19 is disposed in the body component 9 on the other side of the row. The solenoids forming the group 18 are associated with alternate rods 10 while the solenoids of the group 19 are associated with the intermediate rods. The components of the device are thus disposed in a particularly compact manner.

It will be seen from Figure 3 that the distance of the pivot axis 13 of each lever 12 from the point of contact between the lever and the associated rod 10 is about half the distance between the pivot axis of the lever and the point of contact between the lever and the associated armature 14. The lever thus constitutes force multiplying means in that for any given axial movement of the armature 14 the associated rod 10 moves axially through only half that distance, while a corresponding mechanical advantage is obtained.

Each rod 10 is formed part way along its length with a longitudinally extending slot (not shown). An associated helical compression spring extends lengthwise of the slot, one end thereof bearing on the rod at one end of the slot, and the other end bearing on an abutment (not shown) projecting into the slot from one of the body components 8 and 9. The springs urge the rods into retracted positions, in which the end portions thereof terminating in the printing faces 11 project to only a small extent.

Beneath the printing faces 11 extends an endless ink-bearing ribbon 20 similar to a typewriter ribbon. The ribbon 20 extends in a direction inclined to the row of rods 10 so that the width of the ribbon can be less than it would have to be if the ribbon extended at right angles to the row of rods. Drive mechanism (not shown) of a conventional kind is provided for inching the ribbon lengthwise (i.e. for moving the ribbon intermittently through a short distance).

In use a ticket to be printed with bar-coded information is fed past the printing faces 11, the ribbon 20 lying between the printing faces and the ticket. Transport mechanism (not shown) is provided for moving the ticket through the printing station (that is the neighbourhood of the printing faces) at a uniform speed. As the ticket passes, electrical printing signals are supplied in a predetermined sequence to the solenoids 16. When a solenoid receives such a signal the associated armature 14 moves axially and tilts the associated lever 12, which in turn moves the associated rod 10 axially, against the action of its associated spring. The rate of movement of the rod is half that of the associated armature but the force applied to it is greater than that applied by the associated armature to the lever. Owing to its inertia the rod continues to move after the signal has ceased and the action of the associated lever has ceased. During the inertial movement the printing face 11 prints a bar on the ticket by pressing the ribbon 20 onto the ticket. When the printing is finished the spring returns the rod to its retracted position and the armature to its initial position.

In a typical arrangement the armature 14 travels 2 mm during a period of 15 milliseconds. Impact occurs for about one tenth of a millisecond. The rod 10 returns to its retracted position in less than 5 milliseconds from the receipt of the printing signal by the solenoid, successive signals being produced at intervals of 5 milliseconds.

Referring now to Figure 4, this illustrates in diagrammatic form apparatus for use in a multi-use ticket system of the more complex kind outlined above and in which use can also be made of single-use tickets. The apparatus comprises various devices, referred to in more detail below, disposed on paths along which tickets can be moved by suitable transport means such as continuously rotating pairs of wheels or rollers between which the tickets pass. Among the devices illustrated are a magazine 21 containing blank tickets, a clear printer 22 operative to print information onto a ticket in 'clear', that is in ordinary, widely recognised, letters and/or figures and/or other symbols so as to be readable by a user uninstructed in any code, and a bar-code printer 23. These together constitute the principal components of ticket issuing means. The bar-code printer is preferably constituted by a device similar to that illustrated in Figures 2 and 3 and described above.

Other devices illustrated comprise bar-code reading means 24 and a shredder 25. A first path 26 extends from the magazine 21 to a ticket outlet 27 by way of the clear printer 22 the bar-code printer 23 and the bar-code reading means 24. The bar-code reading means 24 includes sensing means disposed on both sides of the first path 26. A second path 28 extends from a ticket inlet 29 to a point on the first path 26 just before the bar-code reading means 24. A third path 30 extends from the first path 26 at a point between the bar-code reading means 24 and the ticket outlet 27. The third path contains the shredder 25 and leads to a waste container (not shown) of which the contents are normally inaccessible to the user.

In use a ticket bearing bar-coded information is inserted into the apparatus through the ticket inlet 29. The ticket may resemble that described above with reference to Figure 1. The ticket is carried along the second path 28 by the transport means to the first path 26 and along that path to the bar-code reading means 24. The bar-coded information on the ticket is read by one or other of the sensing means, depending on the orientation of the ticket when it was inserted into the ticket inlet 29. The reading means produces electrical signals corresponding to the pattern of bars read by it. The bar-code reading means is such as to ignore the bars making up the 'clear' symbol in the second area 7 of the face of the ticket 1. It also operates to extract the details of the bars in the first area 6 of the face of the ticket and to arrange them in a predetermined sequence irrespective of the orientation of the ticket as it passes between the sensing means. This may be effected in the manner hereinbefore described.

The apparatus also includes validation means (not shown) which compares the signals from the bar-code reading means with predetermined criteria of validity to determine whether the ticket is valid. If the criteria are not met the ticket is considered to be invalid and a reject signal is generated. This may result either in the ticket being returned to the user, by way of the first path and the ticket outlet, or in the ticket being withdrawn. In the latter case the ticket is diverted from the first path along the third path to the shredder 25 where it is shredded, the shredded remains being discharged into the container for subsequent disposal. If, on the other hand, the criteria are met the ticket is considered to be valid and an acceptance signal is generated.

Associated with the validation means is means operative to interpret the signals from the bar-code reading means 24 and thus to determine whether the ticket is intended for single use or multiple use.

If the ticket is intended for single use it is preferably returned to the user, unaltered, by way of the first path 26 and the ticket outlet 27. As indicated above, however, there are other possible outcomes. For example the ticket may be withdrawn and shredded to prevent its being re-used. Alternatively a second ticket may be issued to replace the first ticket, as described below. In each instance, however, the acceptance signal is generated, and this initiates whatever action may be necessary to enable the user to take the journey to which the ticket entitles him or her.

If the ticket is intended for multiple use it is diverted to the third path 30 and shredded. In addition, however, a replacement or second ticket is issued (unless the first ticket is being presented for its final purpose, in which case the issuing of a second ticket is optional). A blank ticket is fed from the magazine 21 along the first path 26. Information in 'clear' is printed on one face of it as it passes the clear printer 22. Exceptionally, the ticket may cease movement temporarily as it is printed. Then bar-coded information is printed on its other face as it passes the bar-code printer 23. The bar-coded information applied to the second ticket is at least in part determined by the bar-coded information on the original or first ticket, but differs from it. For example, the arrangement may be such that if the first ticket entitles the holder to ticket-use on a given number of occasions or in a series of different locations, the second ticket may bear bar-coded information such as to entitle the holder to ticket-use on a number of occasions equal to the previous number of occasions reduced by one, or in a series of different locations reduced by one. Likewise if the information on the first ticket represents a given monetary value, the corresponding information on the second ticket may represent a lesser monetary value.

The newly printed ticket passes along the first path to the bar-code reading means. Here the newly printed bar-coded information is read. Checking means (not shown) constituting part of the apparatus checks that that information is what was expected from the electrical signals supplied to the bar-code printer shortly beforehand to cause the information to be printed. Provided the information read from the ticket is what was expected, the ticket is issued from the ticket outlet 27. If the information is not what was expected the ticket is withdrawn and shredded and another second ticket is printed instead. That in turn is checked and the procedure is repeated automatically. If three tickets

**0176635**

are issued but are read as being wrongly printed the apparatus ceases to issue further tickets and a fault signal is generated.

The apparatus may be used on passanger-transport vehicles such as buses. The system may be such that passengers buy or otherwise acquire tickets before they board any particular bus. As each passenger boards the bus he or she inserts it into the apparatus in that bus and, provided the ticket is valid, either has the ticket returned or alternatively is provided with a second ticket in place of the first ticket. The ticket is then valid for a journey on that bus. If the ticket entitles the holder to a further journey or further journeys on another bus or on other buses the holder uses this second ticket as a first ticket when entering the next bus. The apparatus may of course be used on other vehicles as well and the system may be such as to entitle the user to buy a ticket entitling him or her to make an extended journey involving travel on several different kinds of vehicles such as buses, trains and underground trains.

- 22 -

CLAIMS

1. A device for applying bar-coded information to a ticket (1), comprising a plurality of printing elements each in the form of a rod (10) mounted for longitudinal movement and an associated print head (11) at one end of the rod (10), a plurality of electro-magnetic actuators for the printing elements, a different actuator being associated with each printing element and each actuator comprising a solenoid (16) and an armature (14), and force multiplying means (12) operative between each actuator (14,16) and its associated printed element (10), the arrangement being such that in use when a ticket (1) is disposed at a printing station adjacent to the print heads (11) and an electrical printing signal is applied to any one of the solenoids (16), the associated armature (14) moves and in so doing moves the associated print element (10), through the intermediary of the force multiplying means (12), so that the print head (11) of that element (10) causes a bar (4) to be printed on the ticket (1).

2. A device according to Claim 1 which operates in such a manner that during only an initial part of the movement of each printing element (10) is a force applied to the printing element (10) that is derived from movement of the associated armature (14), a subsequent part of the movement, during which printing is effected, resulting at least partially from the inertia of the printing element (10).

3. A device according to either one of Claims 1 and 2 in which each rod (10) is straight and does not flex in use.

4. A device according to any one of the preceding claims in which the print head (11) comprises merely an end portion of the associated rod (10).

5. A device according to any one of the preceding claims in which there is provided return spring means associated with each printing element (10) urging it in the direction opposite to that in which the element (10) moves in response to an electrical signal being applied to the associated solenoid (16).

6. A device according to any one of the preceding claims in which the printing elements (10), or at least some of them, are so disposed that in use if their print heads (11) were operated simultaneously they would print on a ticket (1) a single row of longitudinally aligned bars (4).

7. A device according to any one of the preceding claims in which the rods (10) are longitudinally movable in guideways formed in a body, that body comprising first (8) and second (9) body components such that one face of each guideway is afforded by the first body component (8) and an opposite face of each guideway is afforded by the second body component (9).

8. A device according to any one of the preceding claims in which the rods (10) are disposed in a row and the solenoids (16) are disposed so that there is at least one solenoid on each side of the row.

9. A device according to any one of the preceding claims in which each of the force multiplying means comprises a lever (12) mounted for pivotal movement about an axis intermediate its ends, the associated armature (14) acting upon a portion of the lever (12) to one side of that axis while a portion of the lever (12) to the other side of that axis acts on the associated printing element (10), the arrangement being such that movement of the armature (14) causes a smaller movement of associated printing (10).

10. A device according to any one of the preceding claims in which printing is effected with the aid of a pigment-bearing ribbon (20) disposed between the print heads (11) and the printing station, the print heads (11) being disposed in a row and the width of the ribbon (20) being less than the length of the row, the row being inclined at an angle to the length of the ribbon so that it extends substantially across the full width of the ribbon (20).

11. A device according to any one of the preceding claims in which there is feed means operative to feed a ticket through the printing station without the ticket stopping, so that in use printing is effected while the ticket is being fed through the station.

12. A ticket bearing bar-coded information applied by a device in accordance with any one of the preceding claims.

13. A ticket according to Claim 12 in which part of the bar-coded information comprises one or more letters, numbers or other 'clear' symbols, each consisting of a plurality of bars disposed in appropriate positions on the ticket.

14. Apparatus for use with a multi-ticket system (as herein defined) employing tickets bearing machine-readable information, which apparatus comprises reading means (24) operative to read machine-readable information on a ticket (the first ticket) presented to the reading means, and ticket issuing means (23) operative to issue a second ticket to replace said first ticket, the ticket issuing means (23) being operative to apply to the second ticket machine-readable information dependent on the machine-readable information read by the reading means (24) from the first ticket.

15. Apparatus according to Claim 14 which includes withdrawal means operative to withdraw the first ticket.

16. Apparatus according to Claim 15 in which the withdrawal means includes shredding means (25) or the like, operative to destroy or at least to deface the first ticket so as to make it impossible to use the first ticket again.

17. Apparatus according to any one of Claims 14 to 16 which is such that in use the machine-readable information applied to the second ticket is different from that on the first ticket so that the presentation to the apparatus of a series of two or more first tickets, one after another, each of which tickets bears different machine-readable information, can result in the apparatus issuing a corresponding series of second tickets each of which bears machine-readable information different from that on the corresponding first ticket and different from that on each of the second tickets.

18. Apparatus according to any one of Claims 14 to 17 which is such that in use a second ticket issued by the ticket issuing means (23) is also presented to the reading means (24), the apparatus including checking means operative to read the machine-readable information on the second ticket and to check that it is in fact the information intended to have been applied to it.

19. Apparatus according to any one of Claims 14 to 18 which also includes validation means operative to check the machine-readable information read by the reading means against predetermined criteria and to generate a reject signal if those criteria are not met.

20. Apparatus according to any one of Claims 14 to 19 in which there are provide a ticket inlet, into which tickets are placed or inserted for presentation to the reading means, and a ticket outlet, from which second tickets can be taken or from which they are discharged, there being paths along which the tickets move as they pass through the apparatus in use.

21. Apparatus according to Claim 20 in which there is a first path leading from the ticket issuing means to the ticket outlet by way of the reading means, a second path that leads from the ticket inlet to join the first path between the ticket issuing means and the reading means, and a third path, which leads from the first path, to ticket disposal means, between the reading means and the ticket outlet.

22. Apparatus according to any one of Claims 14 to 21 in which there are associated with the reading means recording means operative to record sequentially a plurality of signals constituting at least part of a machine-readable code read by the reading means from a first ticket, the signals having being disposed on the ticket in a predetermined effective order but the order in which the signals are recorded depending on the initial orientation of the ticket, and interpreting means operative to determine from that code on the first ticket said effective order of the signals.

23. Apparatus according to any one of Claims 14 to 22 in which the machine-readable information is in bar-code form, the reading means comprises a bar-code

- 30 -

(24) and the ticket issuing means includes a bar-code printer (23).

24. Apparatus according to Claim 23 in which the bar-code printer (23) comprises a device according to any one of Claims 1 to 12.

- 30 -

FIG. 1.

FIG. 2.

FIG. 3.

0176635

FIG. 4.

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| Y | FR - E - 94 266 (GERBIER et al.)<br><br>* Figures; page 1, lines 1-5; page 2, line 7 - page 3, line 24 *<br><br>-- | 1,3-12 | G 06 K 1/12<br>G 07 B 1/00 |
| Y | US - A - 3 820 456 (WOLFHEIMER)<br><br>* Abstract; figures; column 2, line 17 - column 4, line 54 *<br><br>-- | 1,3,6,<br>9-13 | |
| Y | FR - A - 2 084 831 (LA HAUSSE et al.)<br><br>* Figures 1,5,7,9; page 1, line 37- page 3, line 7; page 3, line 32 - page 4, line 21 *<br><br>-- | 4,5,7,<br>8 | |
| Y | GB - A - 2 077 663 (VAN RIET)<br><br>* Figures 3-5; abstract *<br><br>-- | 13 | **TECHNICAL FIELDS SEARCHED (Int Cl 4)**<br><br>G 06 K<br>B 07 C<br>G 07 B |
| Y | FR - A - 2 379 121 (MARCONI)<br><br>* Figures 1,2; page 5, line 21 - page 7, line 17 *<br><br>-- | 10 | |
| Y | US - A - 4 192 618 (KONDUR et al.)<br><br>* Abstract *<br><br>--    ./. | 11 | |

~~The present search report has been drawn up for all claims~~

| Place of search | Date of completion of the search | Examiner |
|---|---|---|
| The Hague | 10-01-1985 | FORLEN |

European Patent
Office

**0176635**

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## ✗ LACK OF UNITY OF INVENTION

The Search Division considers that the present European patent application does not comply with the requirement of unity of invention and relates to several inventions or groups of inventions,

namely:

1) Claims 1-13: Device for applying barcoded information to a ticket, and ticket thus obtained
2) Claims 14-24: Apparatus for issuing a replacement ticket bearing machine-readable (e.g. bar coded) information.

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims:     1-13

0176635

European Patent
Office

EUROPEAN SEARCH REPORT

Application number

EP 84 30 6548    -2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR - A - 1 591 768 (BONNET et al.) <br><br> * Figures 1-4; page 2, line 24 - page 3, line 8 * <br><br> ------- | 1,5, 12 | |
| | | | TECHNICAL FIELDS SEARCHED (Int Cl 4) |

The present search report has been drawn up for all claims

| Place of search | Date of completion of the search | Examiner |
|---|---|---|
| | | |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO form 1503 03 82